# EUROPEAN PATENT APPLICATION

(11) **EP 1 871 027 A2**
(43) Date of publication of application: **26.12.2007**
(21) Application number: 07110547.2
(22) Date of filing: 19.06.2007
(51) Int. Cl.: H04H 1/00

(54) **Method and system for providing a similar broadcast service in a system for receiving Digital Video Broadcast (DVB-H)**

(30) Priority: 23.06.2006 KR 20060056959
(71) Applicant: Samsung Electronics Co., Ltd., Suwon-si, Gyeonggi-Do (KR)
(72) Inventor: Kim, Sun-Mi c/o Samsung Electronics Co. Ltd.,, Suwon-si, Gyeonggi-do (KR); Kim, Hyun-Chul c/o Samsung Electronics Co. Ltd.,, Suwon-si, Gyeonggi-do (KR); Jeon, Jin-Woo c/o Samsung Electronics Co. Ltd.,, Suwon-si, Gyeonggi-do (KR); Kim, Young-Jip c/o Samsung Electronics Co. Ltd.,, Suwon-si, Gyeonggi-do (KR); Lee, Byoung-Dai c/o Samsung Electronics Co. Ltd.,, Suwon-si, Gyeonggi-do (KR)
(74) Representative: Zimmer, Franz-Josef

(57) **Abstract**

Disclosed is a method for providing a similar broadcasting service in a DVB-H system. The method includes: configuring and broadcasting Electric Service Guide (ESG) data including service linking information in which a DVB-H transmission server including data and access information about at least one linked service set in a certain DVB-H service; and receiving and storing the ESG data by a DVB-H reception terminal, detecting service linking information corresponding to a DVB-H service during reception from the ESG data if a reception intensity of signals is less than a preset reference value during reception of the DVB-H service, stopping reception of the DVB-H service being currently received, and receiving a linked service included in the service linking information with reference to the detected service linking information.

## Description

The present invention relates to a Digital Video Broadcasting-Handheld (DVB-H) system, and more particularly to a system and a method for providing a service similar to a DVB-H service during reception through another channel or another broadcasting system.

Nowadays, mobile digital broadcasting has rapidly spread. Various standards for such mobile digital broadcasting have been proposed. There are three standards generally used in the world. The first is a Digital Multimedia Broadcasting (DMB) standard adopted as a mobile broadcasting standard in Korea. The second is a DVB-H standard expected to be adopted in Europe. The last is Media FLO technology developed by Qualcomm in the USA.

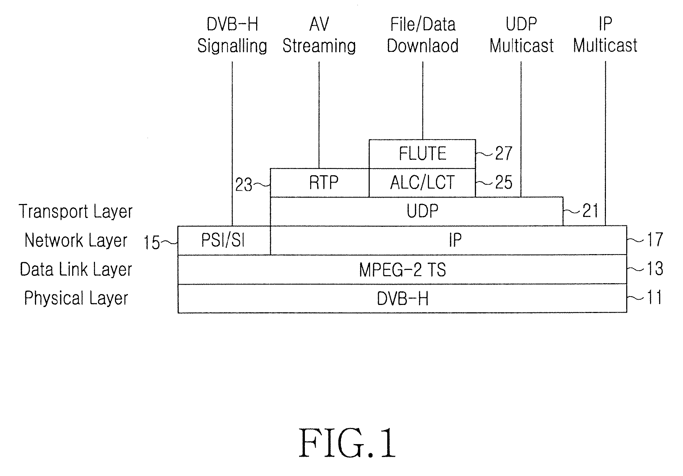

Of them, the DVB-H mobile broadcasting standard is a standard based on DVB that is the existing standard for digital broadcasting in Europe. DVB-H is a mobile broadcasting standard based on a Moving Picture Experts Group (MPEG)-2 system. FIG. 1 is a diagram illustrating the protocol stack of such a DVB-H. The DVB-H protocol stack includes a DVB-H Transport Protocol 11, a MPEG-2 Protocol 13, an Internet Protocol (IP) 17, a Program Specific Information/Service Information (PSI/SI) Protocol 15, a User Datagram Protocol (UDP) 21, a Realtime Transport Protocol (RTP) 23, an ALC/LCT Protocol 25, and a File deLivery over Unidirectional Transport (FLUTE) Protocol 27. A DVB-H system is characterized in that all remaining data, except for PSI/SI information (DVB-H signaling information), are transmitted through IP 17 stack. That is, all data are transmitted through IP packets, wherein all the data supporting audio and video services as well as a file download service are transmitted through the DVB-H system.

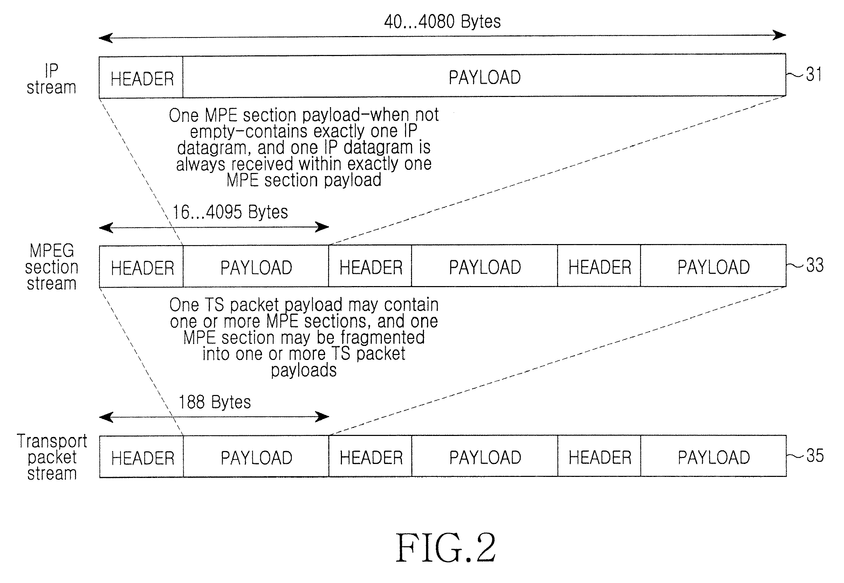

The video data and audio data of the DVB-H are transmitted using RTP 23 that is a protocol stack above IP 17, and file and data are transmitted using FLUTE Protocol 27 that is also a protocol stack above IP 17. Such IP packets are encapsulated in the form of a special Multi-Protocol Encapsulation (MPE) in order to be loaded onto a MPEG 2 system, and then are transmitted. FIG. 2 illustrates a process in which the IP packet of an IP stream 31 is encapsulated into a MPE section and then is included in a MPEG section stream 33. FIG. 2 is a diagram illustrating the general structure of a transport packet stream of a DVB-H system. MPEG section stream 33 is encapsulated in a MPEG transport stream 35. In the DVB-H system, the main role of PSI/Sl information is to provide information regarding how the IP packet is encapsulated in MPEG transport stream 35, and then transmitted. That is, the IP address of a broadcasting service selected in the upper layer is mapped with the Program ID (PID) of an actual MPEG transport stream physically input through the PSI/SI information, so that related IP data can be received by using the IP address. In a DVB-T and a DVB-S service, information related to a broadcasting service is transmitted together with the PSI/SI information. In the DVB-H, since most of the broadcasting-related information is included in Electric Service Guide (ESG) data, such broadcasting-related information is not actually transmitted.

ESG data corresponds to Extensible Markup Language (XML) file having information about a broadcasting service transmitted through the DVB-H system. The DVB-H system reports the type of broadcasting service provided and various information for receiving broadcasting using the ESG data, i.e. an IP address, charged service-related information, etc. Accordingly, before receiving a broadcasting service including video, audio, data, etc., in DVB-H, the ESG data must be received in advance and analyzed. Further, since the ESG data may be updated during use of the service, it is necessary to periodically check the status of the ESG data, and to maintain the newest data.

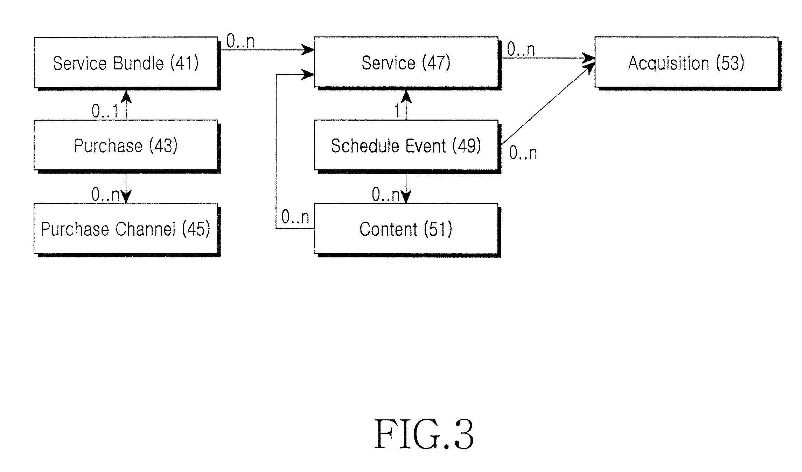

The ESG data complies with DVB-H format as illustrated in FIG. 3. FIG. 3 is a diagram of the general DVB-H compliant ESG data structure. Referring to FIG. 3, ESG data has an XML format including a service fragment 47, a schedule event fragment 49, a content fragment 51, a service bundle fragment 41, a purchase fragment 43, a purchase channel fragment 45 and an acquisition fragment 53. Service fragment 47 defines information related to each channel, schedule event fragment 49 defines schedule information of content transmitted over a specific channel, and content fragment 51 is transferred with information of content transmitted over each channel. Service bundle fragment 41 has information about a service bundle, and is connected to purchase fragment 43 and purchase channel fragment 45 so as to transfer purchase information of a service. Each of the fragments forms mutual connections to constitute the entire ESG data as illustrated in FIG. 3.

An MPEG-2 transport stream is originally for transmitting MPEG-2 video and audio, but it may also transmit data based on a DVB transmission standard. An example of such data broadcasting may include software download through a DVB system, or transmission of an Internet service, etc. A DVB system is currently providing data broadcasting scheme in the form of data piping, data streaming, multi-protocol encapsulation and data carousel. Of them, the multi-protocol encapsulation causes a datagram to be encapsulated in the Digital Storage Media-Command and Control (DSM-CC) of a MPEG-2 transport stream and then to be transmitted through a DVB network. The data broadcast standard of DVB also provides a standard for signaling IP/Media Access Control (MAC) service being transmitted through a DVB network. Through such signaling, DVB reception terminals can become aware of a transport stream, for which tuning must be performed, in order to obtain a desired IP/MAC stream from multiple IP/MAC streams transmitted through various transport streams. A signaling method is implemented through an IP/MAC Information Notification Table (INT).

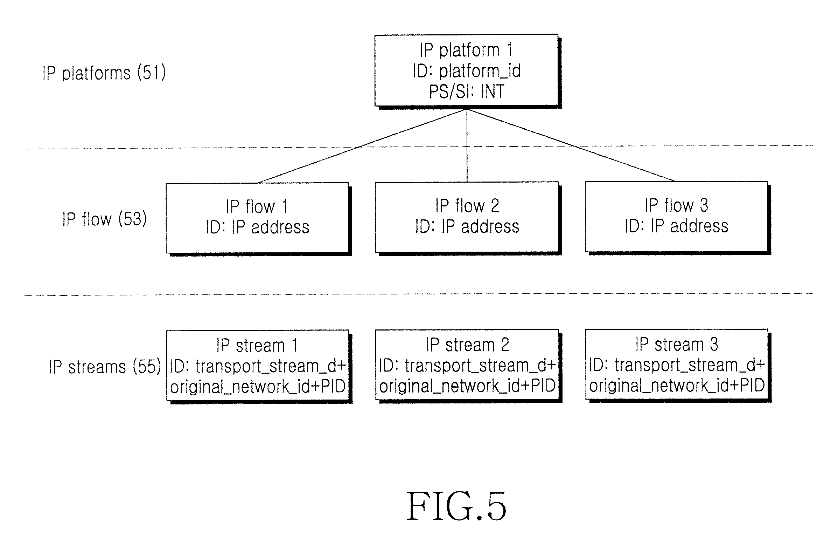

In the multi-protocol encapsulation, an IP/MAC platform corresponds to a set of IP/MAC streams managed by one organization. An IP/MAC ensures no conflict of IP/MAC addresses within a corresponding IP/MAC platform. One IP/MAC platform may be transmitted through a plurality of transport streams included in one or multiple DVB networks. An IP/MAC stream is a data stream with a header including an IP address or a MAC address, and is encapsulated in an MPEG-2 transport stream multiplex. For example, an IP multicast stream transmitted to an MPE section corresponds to an IP/MAC stream. A platform ID is uniquely assigned to each IP/MAC platform. If a DVB reception terminal selects one IP/MAC platform, it is ensured that there will be no conflict of subsequent IP/MAC addresses. FIG. 5 is a diagram illustrating the general relation among an IP platform 51, an IP flow 53 and an IP stream 55 which have such a correlation.

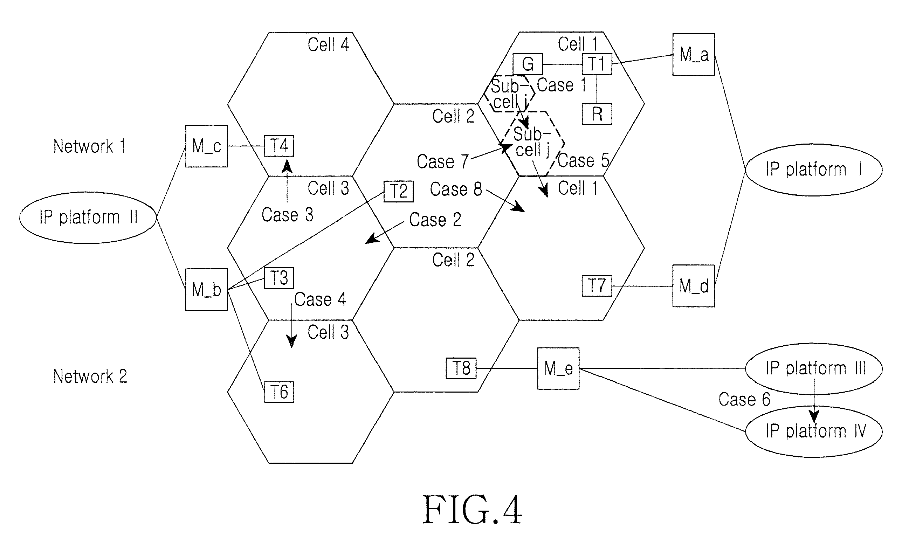

Since DVB-H standard targets portable broadcasting, it also considers various handover situations. FIG. 4 is a diagram showing various handover cases, which may occur in a DVB-H system. Referring to FIG. 4, from among DVB-H reception terminals T1 to T8, T1 and T7 receive a DVB-H service broadcasted through an IP platform 1, T4, T3, T2 and T6 receive the DVB-H service broadcasted through an IP platform 2, and T8 receives the DVB-H service broadcasted through an IP platform 3. In the DVB-H system, when the DVB-H reception terminals move among cells or DVB networks as illustrated in FIG. 4, handover is required. When handover is required, it is determined if an IP address basically received by a user can be received in a new cell or network. If the IP address can be received, handover is performed in such a manner that an IP packet transmitted through the same IP address is received in the new cell or network. The determination regarding if the IP address can be received in the new cell or network can be implemented by analyzing the INT information of a PSI/Sl and information of a cell_list_descriptor, a cell_frequency_link_descriptor, etc., of an INT. If the same IP address does not exist, the service is not received.

Further, in a DVB-H standard, roaming is referred to as a case in which an IP platform changes, for example, a case in which IP platform 3 changes into IP platform 4 as with case 6 in FIG. 4. In the case of roaming, there is no method capable of ensuring the continuity of a DVB-H service. Handover being discussed in a DVB-H standard up to now is performed based on the identity of the IP address as described above. However, such a method cannot be applied when roaming has occurred, i.e. when an IP platform has changed. This is because in the DVB-H system same IP address can be used within IP platforms. In addition, in the current DVB-H system, there is no method capable of providing correlation information between a service of the DVB-H system and a service of a system other than the DVB-H system.

Accordingly, the present invention has been made to solve the above-mentioned problems occurring in the prior art. It is the object of the present invention to provide a method and a system for more providing a user with a smooth transition between similar services when roaming or handover is performed in the current DVB-H system.

This object is solved by the subject matter of the independent claims.

Preferred embodiments are defined in the dependent claims.

It is an aspect of the present invention to provide a method and a system for providing a consecutive similar service of another system accessible by a user through correlation information when the user has deviated from a DVB-H service area.

In order to accomplish the aforementioned object, according to one aspect of the present invention, there is provided a method for providing a similar broadcasting service in a Digital Video Broadcasting-Handheld (DVB-H) system, the method includes configuring and broadcasting Electric Service Guide (ESG) data including service linking information including data and access information about at least one linked service set in a certain DVB-H service; and receiving and storing the ESG data by a DVB-H reception terminal, detecting service linking information corresponding to a DVB-H service during reception from the ESG data if the reception intensity of signals is less than a preset reference value during reception of the DVB-H service, stopping reception of the DVB-H service being currently received, and receiving a linked service included in the service linking information with reference to the detected service linking information.

The present invention will be more apparent from the following detailed description when taken in conjunction with the accompanying drawings, in which:
FIG. 1 is a diagram illustrating the general protocol stack of a DVB-H;
FIG. 2 is a diagram illustrating the general structure of a transport packet stream of a DVB-H system;
FIG. 3 is a diagram illustrating the general ESG data structure of a DVB-H;
FIG. 4 is a diagram illustrating handover cases which may occur in a DVB-H system;
FIG. 5 is a diagram illustrating a general relation among an IP platform, an IP flow and an IP stream;
FIG. 6 is a block diagram illustrating the construction of a DVB-H system to which the present invention applies;
FIG. 7 is a ladder diagram illustrating the operative processes of a DVB-H transmission server and a DVB-H reception terminal according to the present invention; and
FIG. 8 is a flow diagram illustrating the operation process of a DVB-H reception terminal according to the present invention.

Hereinafter, a preferred embodiment according to the present invention will be described with reference to the accompanying drawings. It should be noted that similar components are designated by similar reference numerals although they appear in different drawings. Also, in the following details description of known functions and configurations incorporated herein will be omitted when it may obscure the subject matter of the present invention.

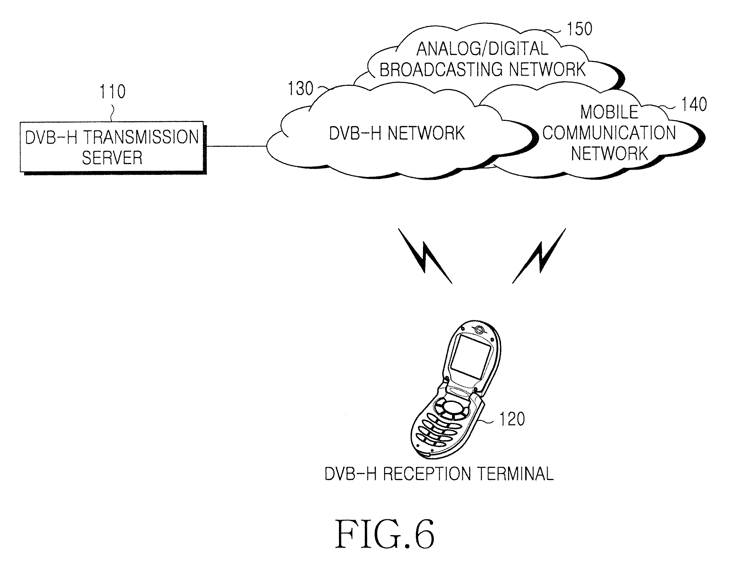

A DVB-H system to which the present invention applies will be described with reference to FIG. 6. The DVB-H system includes a DVB-H transmission server 110, a DVB-H reception terminal 120, a DVB-H network 130, an analog/digital broadcasting network 150 and a mobile communication network 140.

DVB-H transmission server 110 converts broadcasting content, which is provided from various content providers, according to the DVB-H standard, and broadcasts the converted content through Internet Protocol (IP) platforms allocated to the content providers and channels within each of the IP platforms, thereby providing a DVB-H service. DVB-H transmission server 110 configures and broadcasts ESG data as illustrated in FIG. 3, wherein the ESG data includes the type of a provided broadcasting service and various information for receiving broadcasting, i.e. an IP address and charged service-related information. If there exists a linked service related to a certain service or channel during broadcasting, service linking information is included in the ESG data according to the present invention.

The service linking information includes data related to channels linked to a certain channel. That is, the service linking information includes data about other broadcasting channels which DVB-H reception terminal 120 can preferentially connect to after stopping a connection with a currently received channel at a user's request or when the signal intensity of the currently received channel has become weak. The channels linked to the certain channel are set by an agreement of content providers. The service linking information may contain data corresponding to a channel or content, and includes information related to another channel linked to the certain channel in relation to a service by an agreement, or different channels providing content identical to or similar to a certain content. For example, the broadcasting service linking information of channel A may include information about channels B and C providing a broadcasting service similar to that provided through channel A. In another example, the service linking information of content "a" provided through channel A may include information related to channels B and C providing content identical to or similar to content "a". The different channels may be channels included in an IP platform identical to that of channel A, or may be channels included in a different IP platform, or may be channels of a broadcasting system other than a DVB-H system. The correlation among the channels may be set by agreement among broadcasters. For example, the correlation may be set between the sports channel of KBS and the sports channel of MBC, and the correlation may be set among all channels providing a broadcasting of a professional baseball game in Korea.

Accordingly, the service linking information includes transport information, IP platform ID information, service ID information, content ID information, session description information, and information about the degree of similarity. The transport information includes information about a broadcasting network providing a linked channel, and may include information representing a DVB-H, a Wireless Local Area Network (WLAN), a Wireless Broadband (WIBRO), a Multimedia Broadcast/Multicast Service (MBMS), a Broadcast and Multicast Service (BCMCS), etc. The IP platform ID information includes information about an actually linked channel from among a plurality of channels through which a corresponding broadcasting network provides a service. When a linked service is transmitted to a DVB-H network, the IP platform ID information includes information about an ID of an IP platform to which the linked service belongs. The service ID information includes information about a service provided through the linked channel. When the linked service is transmitted to the DVB-H network, the service ID information includes information about a service ID of the linked service. The content ID information includes information about content provided through the linked channel. When linked content is transmitted to the DVB-H network, the content ID information includes information about a content ID of the linked content. The session description information includes information necessary for actually accessing the linked service. In the linked service transmitted to the DVB-H network, SDP information is transmitted through the session description. When the linked service is transmitted to networks other than the DVB-H network, an IP address, etc., for accessing a corresponding service may be transmitted through the session description. The transmitted information, which represents whether the same or similar content is provided, includes information about the degree of similarity of broadcasting services or contents provided through the linked channel. In the present invention, when linked content is similar, it is referred to as a soft link. However, when the linked content is dissimilar, it is referred to as a hard link.

In order to add the service linking information to ESG data, a schema about a transport type and a linking info type is added to a data type for ESG XML as shown in Table 1 according to the present invention.

**Table 1**

| |
|---|
| <simpleType name="TransportType"> |
| <restriction base="string"> |
| <enumeration value="DVB-H"> |
| <enumeration value="WLAN"> |
| <enumeration value="WIBRO"> |
| <enumeration value="MBMS"> |
| <enumeration value="BCMCS"> |
| </restriction> |
| <simpleType> |
| |
| <complexType name="LinkInfoType"> |
| <sequence> |
| <element name ="Transport" type="esg:Transport type"> |
| < element name ="PlatformID" type="anyURI" minOccurs="0"/> |
| < element name ="ServiceID" type="anyURI" minOccurs="0"/> |
| < element name ="ContentID" type="anyURI" minOccurs="0"/> |
| < element name ="SessionDdescription" type="string" minOccurs="0"/> |
| </sequence> |
| <attitude name="SH" type="boolean" use="required"/> |

Referring to Table 1, the Transport Type corresponds to the transport protocol. Table 1 shows the case of supporting a connection with a service transmitted to the DVB-H, WLAN, WIBRO, MBMS and BCMCS. The PlatformlD of the LinklnfoType corresponds to the IP platform ID, the ServicelD corresponds to the service ID, the ContentID corresponds to the content ID, and the SessionDdescription corresponds to the session description. Last, the SH corresponds to the information about the degree of similarity. When the SH has a value of 0, the linked service is a soft link. When the SH has a value of 1, the linked service is a hard link.

In order to indicate that there exists a service linked to a certain service or a certain channel being currently transmitted by DVB-H transmission server 110, and the service linking information for the linked service exists in the ESG data, elements related to the service linking are added to the service fragment schema of the ESG as shown in Table 2.

**Table 2**

| |
|---|
| <complexType name="ServiceType"> |
| <sequence> <element name ="ServiceName" type="tva:ServiceInformationNameType" maxOccurs="unbounded"/> |
| <element name ="ServiceNumber" type="unsignedShort" minOccurs="0"/> |
| <element name ="ServiceLogo" type="mpeg7:TitleMediatype" minOccurs="0" maxOccurs="unbounded"/> |
| <element name ="ServiceDescription" type="tva:SynopsisType" minOccurs="0" maxOccurs="unbounded"!> |
| <element name ="ServiceGenre" type="tva:GenreType" minOccurs="0" maxOccurs="unbounded"/> |
| <element name ="ServiceType" type="tva:ControlledTermType" minOccurs="0" maxOccurs="unbounded"/> |
| <element name ="ParentalGuidance" type="mpeg7: ParentalGuidanceType" minOccurs="0" maxOccurs="unbounded"/> |
| <element name ="ServiceLanguage" type="language" minOccurs="0"/> |
| <element name ="ServiceProvider" type="esg: ProviderType" minOccurs="0"/> |
| <element name ="AcquisitionRef" type="esg:AcquisitionRefType" minOccurs="0" maxOccurs="unbounded"/> |
| <element name ="RelatedMaterial" type="esg:RelatedMaterialType" minOccurs="0" maxOccurs="unbounded"/> |
| **<element name="LinkedService" type="esg: LinkInfoType" minOccurs="0"/>** |
| <element name="PrivateData" type="esg:PrivateDataType" minOccurs="0" maxOccurs="unbounded"/> |
| </sequence> |
| <attribute name="servicelD" type="anyURI" use="required"/> |
| <attribute name="freeToAir" type="boolean" use="optional"/> |
| <attribute name="clearToRir" type="boolean" use="optional"/> |
| </complexType> |

In order to indicate that there exists a service linked to certain content being currently transmitted by DVB-H transmission server 110, and the service linking information for the linked service exists in the ESG data, elements related to the service linking are added to the content fragment schema of the ESG as shown in Table 3.

**Table 3**

| |
|---|
| <complexType name="ContentType"> |
| <sequence> |
| <element name ="Title" type="mpeg7:Titletype" mixOccurs="0" maxOccurs="unbounded"/> |
| <element name ="MediaTitle" type="mpeg7:TitleMediaType" minOccurs="0" maxOccurs="unbounded"/> |
| <element name ="ServiceRef" type="esg:ESGIDRefType" minOccurs="0" maxOccurs="unbounded"/> |
| <element name ="Synopsis" type="tva:SynopsisType" minOccurs="0" maxOccurs="unbounded"/> |
| <element name ="Keyword" type="tva:KeywordType" minOccurs="0" maxOccurs="unbounded"/> |
| <element name ="Genre" type="tva:GenreType" minOccurs="0" maxOccurs="unbounded"/> |
| <element name ="ContentType" type="tva:ControlledTermType" minOccurs="0" maxOccurs="unbounded"/> |
| <element name ="ParentalGuidance" type="mpeg7: ParentalGuidanceType" minOccurs="0" maxOccurs="unbounded"/> |
| <element name ="Language" type="mpeg7: ExtendedlanguageType" minOccurs="0" maxOccurs="unbounded"/> |
| <element name ="CaptionLanguage" type="tva:CaptionLanguageType" minOccurs="0" maxOccurs="unbounded"/> |
| <element name ="SignLanguage" type="tva:SignLanguageType" minOccurs="0" maxOccurs="unbounded"/> |
| <element name ="CreditsList" type="tva:CreditsListType" minOccurs="0"/> |
| <element name ="RelatedMaterial" type="esg:RelatedMaterialType" minOccurs="0" maxOccurs="unbounded"/> |
| <element name ="Duration" type="Duration" minOccurs="0"/> |
| **<element name="LinkedContent" type="esg:LinkInfoType" minOccurs="0"/>** |
| <element name="PrivateData" type="esg:PrivateDataType" minOccurs="0" maxOccurs="unbounded"/> |
| </sequence> |
| <attribute name="contentID" type="anyURI" use="required"/> |
| </complexType> |
| </complexType> |

DVB-H reception terminal 120 receives a transport stream from DVB-H transmission server 110 through DVB-H network 130, receives an IP packet by using ESG data included in the transport stream, etc., modulates the received IP packet, and provides the modulated IP packet to a user. If the reception intensity of a DVB-H service being received becomes weak, or a user's request is received, DVB-H reception terminal 120 detects the ESG data, and determines if there exists a service linked to the content of the DVB-H service. If the service exists, the DVB-H reception terminal 120 detects service linking information from the ESG information, stops the reception of the DVB-H channel being received, and links a channel included in the service linking information. DVB-H reception terminal 120 can display the type of each linked service, which is included in the service linking information, in the form of text.

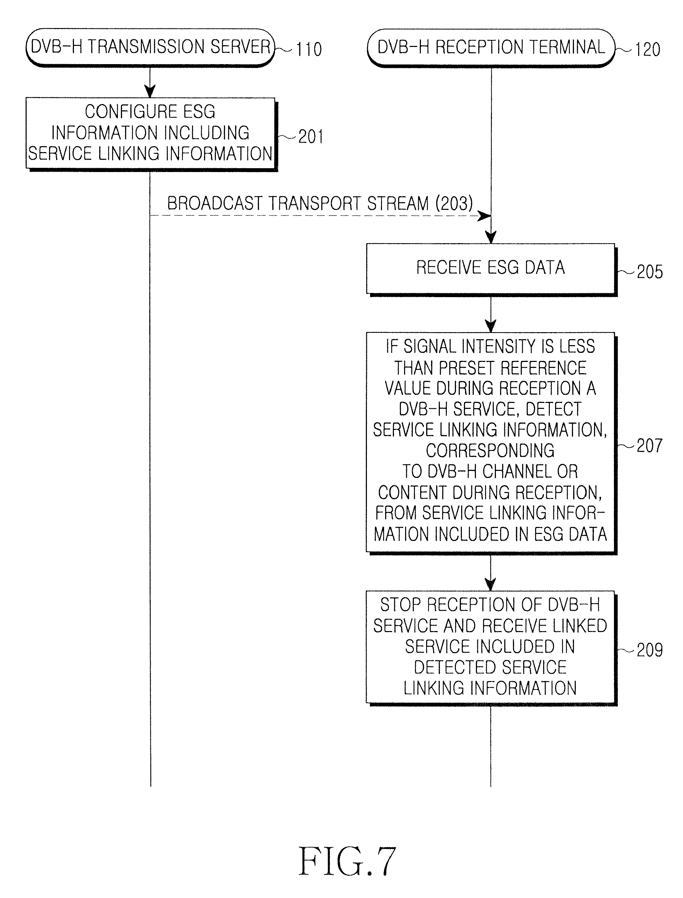

The operative processes of DVB-H transmission server 110 and DVB-H reception terminal 120 as described above will be described with reference to FIG. 7. FIG. 7 is a ladder diagram illustrating the operative processes of DVB-H transmission server 110 and DVB-H reception terminal 120 according to the present invention. Referring to FIG. 7, in step 201, if there exists a service to be broadcasted, i.e. if there exists a service in which a linked service has been set according to an agreement of content providers from among channels or contents, DVB-H transmission server 110 configures ESG data including service linking information related to a corresponding service. In step 203, DVB-H transmission server 110 broadcasts a transport stream.

In step 205, DVB-H reception terminal 120 receives the broadcasted transport stream, i.e. the ESG data. In step 207, if a signal intensity is less than a preset reference value during the reception of a DVB-H service, DVB-H reception terminal 120 detects service linking information, which corresponds to a DVB-H channel or content during reception, from service linking information included in the ESG data. The signal intensity may become weak when DVB-H reception terminal 120 is located in an area in which handover or roaming occurs or a blanket area, or when an error has occurred in the transmission of a transport stream due to a network problem.

In step 209, DVB-H reception terminal 120 stops the reception of the DVB-H service, and receives one of the linked services included in the detected service linking information. Herein, DVB-H reception terminal 120 provides a user with at least one of linked service information, thereby causing the user to select the performance of the linked service or causing a certain linked service to be performed. In such a case, a conventional handover procedure may also be first performed before accessing the linked service, or accessing the linked service may also be preferentially considered. When at least two linked services exist, a priority is preset and then accessing a linked service with a higher priority may also be first performed. The priority related to each linked service may be determined according to the type of a broadcasting network providing the linked service, the type of a broadcasting format receivable in and reproducible by DVB-H reception terminal 120, or an agreement of content providers.

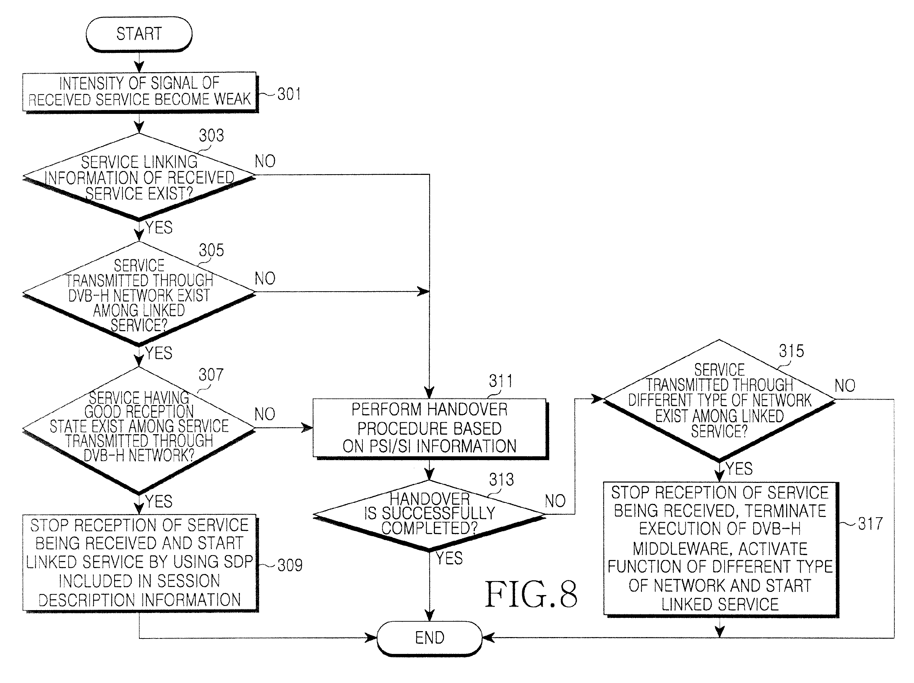

FIG. 8 is a flow diagram showing the detailed process of DVB-H reception terminal 120 according to the present invention. The operative process of FIG. 8 corresponds to the operative process of DVB-H reception terminal 120 when, in the case of accessing a linked service related to a certain DVB-H service, accessing a linked service provided through a DVB-H network is preferentially performed before a general handover procedure.

Referring to FIG. 8, if the intensity of signals of a DVB-H service during reception is less than a preset reference value in step 301, DVB-H reception terminal 120 confirms stored ESG data in order to determine if there exists service linking information of the service being currently received. If the service linking information exists, step 305 is performed. Otherwise, step 311 is performed. In step 305, DVB-H reception terminal 120 determines if services transmitted through a DVB-H network exist among linked services. If the services transmitted through the DVB-H network exist, step 307 is performed. Otherwise, step 311 is performed. In step 307, DVB-H reception terminal 120 determines if a service having a good reception state exists among the services transmitted through the DVB-H network. If the service having a good reception state exists, step 309 is performed. In step 309, DVB-H reception terminal 120 stops the reception of the DVB-H service, starts linked services by using an SDP included in session description information, and terminates the operation process. That is, if there occurs a case in which it is difficult to receive the service during reception due to handover, etc., DVB-H reception terminal 120 receives linked services of the service during reception through the DVB-H network, and preferentially accesses a service having a good reception state.

In the meantime, when linked services having been set to the service being currently received as a result of the determination in step 305 do not exist i.e., when the linked services received through the DVB-H network do not exist among the linked services or the service having a good reception state does not exist among the linked services received through the DVB-H network as a result of the determination in step 307, step 311 is performed. That is, DVB-H reception terminal 120 performs a handover procedure based on PSI/SI information. Then, if the handover is successfully completed, DVB-H reception terminal 120 terminates the operation process in step 313. However, if the handover is not successfully completed, step 315 is performed. In step 315, DVB-H reception terminal 120 determines if a service transmitted through a different type of network exists among the linked services. If the service transmitted through the different type of network exists, step 317 is performed. That is, DVB-H reception terminal 120 stops the reception of the service being received, terminates the execution of DVB-H middleware, activates the functions of the different type of network, starts linked services, and terminates the operation process.

According to the present invention as described above, information about a different service linked to a certain DVB-H service is included in ESG data for transmission. Accordingly, when handover, roaming or reception failure has occurred, a DVB-H reception terminal attempts to access a linked service by using service linking information, so that it is possible to perform roaming which has been impossible in the prior art, and it is also possible to smoothly perform handover. Further, it is possible to enable cooperation with a service provided to other broadcasting networks.

In the above description, ESG data is included in a transport stream and is transmitted through a DVB-H network. However, in another embodiment of the present invention, the ESG data may also be transmitted through other communication networks including a mobile communication network. Further, in the above description, accessing a linked service is implemented when the intensity of signals of a service during reception becomes weak. However, the accessing may also be implemented whenever a user so requires.

Although a preferred embodiment of the present invention has been described for illustrative purposes, those skilled in the art will appreciate that various modifications, additions and substitutions are possible, without departing from the scope of the invention as disclosed in the accompanying claims.

## Claims

1. A method for providing a similar broadcasting service in a Digital Video Broadcasting-Handheld, DVB-H, system, the method comprising the steps of:
configuring and broadcasting Electric Service Guide data, the ESG data including service linking information including data and access information about at least one linked service set in a certain DVB-H service; and
receiving and storing the ESG data by a DVB-H reception terminal, detecting service linking information corresponding to a DVB-H service during reception from the ESG data if a reception intensity of signals is less than a preset reference value during reception of the DVB-H service, stopping reception of the DVB-H service being currently received, and receiving a linked service included in the service linking information with reference to the detected service linking information.

2. The method as claimed in claim 1, further comprising, if a linked broadcasting service access request is received from a user, detecting by the DVB-H reception terminal the service linking information corresponding to the DVB-H service during reception, from the ESG data, stopping the reception of the DVB-H service being currently received, and receiving the linked service included in the detected service linking information.

3. The method as claimed in claim 2, wherein the service linking information includes information about a broadcasting network providing the linked service, channel information related to the linked service, content information of the linked service, access information of the linked service, and similarity information representing a degree of similarity among contents of the linked service.

4. The method as claimed in claim 2, wherein, if the linked service is a service transmitted through a DVB-H network, the service linking information includes information about a broadcasting network providing the linked service, ID information of an IP platform to which the linked service belongs, service ID information of the linked service, content ID information of content provided through the linked service, session description protocol, SDP, information related to the linked service, and similarity information representing a degree of similarity among contents of the linked service.

5. The method as claimed in one of claims 1 to 4, wherein said at least one linked service related to the certain DVB-H service is set by an agreement.

6. A system for providing a similar broadcasting service in a Digital Video Broadcasting-Handheld, DVB-H, system, the system comprising:
a DVB-H transmission server for configuring and broadcasting Electric Service Guide, ESG, data which includes service linking information having data and access information about at least one linked service set in a certain DVB-H service; and
a DVB-H reception terminal for receiving and storing the ESG data, detecting service linking information, corresponding to a DVB-H service during reception from the ESG data, if a reception intensity of signals is less than a preset reference value during reception of the DVB-H service, stopping reception of the DVB-H service being currently received, and receiving a linked service included in the service linking information with reference to the detected service linking information.

7. The system as claimed in claim 6, wherein, if a linked broadcasting service access request is received from a user, the DVB-H reception terminal detects the service linking information, corresponding to the DVB-H service during reception, from the ESG data, stops the reception of the DVB-H service being currently received, and receives the linked service included in the detected service linking information.

8. The system as claimed in claim 7, wherein the service linking information includes information about a broadcasting network providing the linked service, channel information related to the linked service, content information of the linked service, access information of the linked service, and similarity information representing a degree of similarity among contents of the linked service.

9. The system as claimed in claim 7, wherein, if the linked service is a service transmitted through a DVB-H network, the service linking information includes information about a broadcasting network providing the linked service, ID information of an IP platform to which the linked service belongs, service ID information of the linked service, content ID information of content provided through the linked service, SDP information related to the linked service, and similarity information representing a degree of similarity among contents of the linked service.

10. The system as claimed in one of claims 6 to 9, wherein said at least one linked service related to the certain DVB-H service is set by an agreement.

11. A method for providing by a DVB-H reception terminal a similar broadcasting service in a Digital Video Broadcasting-Handheld, DVB-H, system, the method comprising the steps of:
receiving broadcasted Electric Service Guide data, the ESG data including service linking information having data and access information about at least one linked service set in a certain DVB-H service;
detecting service linking information, corresponding to a DVB-H service being currently received, from the ESG data if a reception intensity of signals is less than a preset reference value during reception of the DVB-H service; and
stopping the reception of the DVB-H service being currently received, and receiving a linked service included in the service linking information with reference to the detected service linking information.

12. The method as claimed in claim 11, further comprising:
detecting from the ESG data the service linking information corresponding to the DVB-H service being currently received, if a linked broadcasting service access request is received from a user; and
stopping the reception of the DVB-H service being currently received, and receiving the linked service included in the detected service linking information.

13. The method as claimed in claim 12, wherein the service linking information includes information about a broadcasting network providing the linked service, channel information related to the linked service, content information of the linked service, access information of the linked service, and similarity information representing a degree of similarity among contents of the linked service.

14. The method as claimed in claim 12, wherein, if the linked service is a service transmitted through a DVB-H network, the service linking information includes information about a broadcasting network providing the linked service, ID information of an IP platform to which the linked service belongs, service ID information of the linked service, content ID information of content provided through the linked service, SDP information related to the linked service, and similarity information representing a degree of similarity among contents of the linked service.

15. The method as claimed in claim 11, wherein said at least one linked service related to the certain DVB-H service is set by an agreement.
